# EUROPEAN PATENT SPECIFICATION

(11) **EP 1 920 820 B1**
(45) Date of publication and mention of the grant of the patent: **18.01.2012**
(21) Application number: 06807867.4
(22) Date of filing: 19.07.2006
(51) Int. Cl.: B01D 53/76, B01D 53/60

(54) **METHOD OF REDUCING THE PROPORTION OF POLLUTANTS IN INDUSTRIAL FLUE GASES AND METHOD OF PREPARING A COMPOSITION THAT IS USED FOR SAME**
VERFAHREN ZUR VERRINGERUNG DES ANTEILS AN SCHADSTOFFEN IN INDUSTRIERAUCHGASEN UND VERFAHREN ZUR HERSTELLUNG EINER ZUSAMMENSETZUNG DAFÜR
PROCEDE PERMETTANT DE REDUIRE LE TAUX D'AGENTS CONTAMINANTS DANS LES GAZ DE COMBUSTION INDUSTRIELS ET PROCEDE PERMETTANT DE PREPARER UNE COMPOSITION UTILE POUR LEDIT PROCEDE

(30) Priority: 19.07.2005 ES 200501758
(43) Date of publication of application: 14.05.2008
(73) Proprietor: Bionatur Biotechnologies S.L., 08019 Barcelona (ES)
(72) Inventor: Garcia-Blairsy Reina, Guillermo, 35007 Las Palmas de Gran Canaria (ES); Miro Espinos, José, 08015 Barcelona (ES)
(74) Representative: Curell Aguilà, Marcelino
(86) International application number: PCT/ES2006/000419
(87) International publication number: WO 2007/010069

(56) References cited:
- EP-A- 0 295 956
- WO-A-95/26806
- WO-A1-93/24205
- ES-A1- 2 164 611
- US-A- 3 396 158
- US-A- 5 948 405
- US-B1- 6 648 949

## Description

### TECHNICAL FIELD OF THE INVENTION

The present invention comes within the technical field of procedures, methods and products intended to reduce nitrogen oxides (NOx), sulphur oxides (SOx), total reduced sulphur (TRS) and dioxins produced in the burning of fossil fuels (coal, petroleum, natural gas, fuel-oil) by fixed sources (thermal power stations, incinerator plants, cement plants, petrochemical facilities, etc.) which cause serious problems of environmental pollution and public health.

### STATE OF THE ART PRIOR TO THE INVENTION

NOx, CO₂ and SOx emissions associated with industrial development are now acknowledged by governments and international intergovernmental bodies to be one of the most important causes of global pollution and climate change.

While the concentration of SO₂ in the environment has been gradually falling (owing to legal restrictions and to the use of desulphured fields and gas desulphuration technologies), NOx emissions continue to increase (in Europe reaching emission values of 30-40 kg per inhabitant per year) and they now easily exceed the levels that the Earth's ecosystem can withstand. The so-called "greenhouse effect" of NOx is 320 times higher than that of CO₂ and the concentration in the environment of NO₂ (which is four times more noxious than NO and the precursor of nitric and nitrous acids) generates a toxic *photochemical smog* that is almost permanent in many densely populated parts of the planet, with concentrations that exceed 50 ppb. Various calls from the scientific community and governmental declarations of intent have, since the decade of the '80s, been drawing attention to the urgent need to reduce NOx emissions by between 10 % and 50 % by the end of the last century (Hjalmarsson A.K., IEACR, 24, 21, 1990), with very little response until the recent ratification of what is known as the Kyoto Protocol, with the subsequent emission quotas and heavy tariffs on contaminating industries.

The implementation of non-selective catalytic reduction technologies in moving sources (in other words, the introduction of bimetallic catalysts using precious metals - platinum/rhodium or platinum/palladium - in the exhaust pipes of automobiles which cause the NOx and O₂ to react with CO and other unburned hydrocarbons) has enabled NOx emission from moving sources to be alleviated.

In stationary sources of NOx (in other words, large petrochemical plants, thermal power stations, incinerators, etc.), the situation is more problematical.

The main causes of the problems of industrial emissions of NOx lie in the combination of low efficiency, hazardousness and high cost of the NOx elimination systems that are currently being applied, or which have been proposed in patents in this regard.

The technology known as "selective catalytic reduction" (SCR) is the method that has been most used since the end of the decade of the 70s of the last century. It uses ammonia as reducer, which is injected into the outlet gases in the presence of suitable catalysts. Developed in Japan more than 30 years ago, this technology was applied for the first time to a coal-fired thermal station at the end of 1980, later on in Germany in 1985, and it has currently been introduced into various countries and industrial sectors with different modifications. It is a costly method. The total capital and operating costs associated with the installation of an SCR device in a standard plant is currently estimated to be more than € 3,500,000 (capital) and € 70,000 / y (operating). Considering the maximum reductions in NOx emissions that can be reached, this leads to a cost of more than € 25,000 per ton of NOx filtered.

Another technology that has been proposed is what is known as "non-catalytic selective reduction", which mainly uses ammonia or urea as reducing chemical reagents, which are injected into the tower at suitable temperatures and which permit a reduction of up to 60 % of NOx. The technique presents the advantage that no catalyst needs to be used, but it has the drawback of requiring a higher consumption of ammonia, higher reaction temperatures (800-1000 C) and the fact that the ammonia that does not react forms by-products that erode the equipment of the facility.

A third technology consists of combined processes for the elimination of SO₂ and NOx. Although various processes have been developed at the laboratory and theoretical level, there are only a few in operation. In some cases, they concern independent processes that can eliminate the SO₂ or both, SO₂ and NOx. In the NOx elimination stage, ammonia is used as a reducer in the presence of active carbon. There are several plants in existence, the first of which was started up in Germany in 1987. The reduction of NOx with ammonia in the presence of active carbon, which acts as a catalyst, is in reality an SCR process that uses active carbon as catalyst.

On these types of conventional technologies for NOx elimination, a range of improvements and patents have been introduced, which basically affect the composition and geometry of the catalysts (consisting of titanium oxide, iron oxide, different types of zeolites, precious metals, different forms of activated carbon, etc., and manufactured in the form of pellets, honeycomb panels, plates, microcapsules, etc.), described for example in publications EP-A-0 393 917, EP-A-0 311 066, ES 2 090 269 T3, ES 2 103 223 A1, the treatment and regeneration of gas scrubbing systems described for example in the publications ES 2 182, 373 T3 and the ammonia injection systems described for example in publications ES 2 147 742 T3, ES 2 173 437 T3, the preparation systems for various types of metallic catalyst described for example in publications ES 2 094 012 T3, EP-A 472 014, EP-A 385 164, EP-A 317 875, and the production of different porous alumina sorbents described for example in patents US No. 5,180,703 and US No: 4,798,711, ES 2 108 369 T3.

The technologies described in these documents introduce improvement in numerous drawbacks of conventional NOx reduction technologies, such as:
- Progressive loss of reactivity of the catalysts
- Low effectiveness (in percentage or durability) of the process
- Low s/v ratio of the carriers
- Contamination (inactivation) of the metallic reducers
- High cost of catalysts, both carbon and metallic, and difficulties in current and, above all, future provisioning of the latter
- Blocking of the pores of fluidised beds by the gases
- Need for high temperatures (above 800 C) so that certain modified organic catalysts can be effective (e.g., coal-Cu or coal-Fe, e.g., Minsheng Pharm. Factory, Chinese patent No. 1056825, or the Japanese Mitsui Kozan KK (No. 920622 B) or for low temperatures for metallic catalysts to be effective
- Hazardousness of transporting large quantities of concentrated ammonia
- Formation of by-products that can attack and erode the combustion facilities
- The high cost of the assembly and maintenance of NOx elimination systems in the industrial plant
- Complexity and cost in preparation and/or activation catalyst, etc.

Document US 6648949 describes a novel stack application for improved CO₂ and particle removal/collection from flue gases produced during coal power-generation processes. Collection efficiency is improved by a cascading water film or algae-laden water film on the inside of the stack wall to eliminate the re-entrainment of small particles and for ease of transporting the captured particles. The stack can also be used as a photochemical or a biological reactor to promote a photosynthesis reaction between CO₂ and algae-laden water to form carbohydrate substrates for CO₂ sequestration and utilization.

Nevertheless, even these technologies continue to suffer drawbacks, such as the need to use precious metal catalysts (oxides or sulphates of Ti, V, Fe, Mo, W, Ni, Co, Cu, U, Ag, Mg, B, Nb, Sb, Bi, Mn, etc.), activated carbon in any form, the need for fluidised beds, the use of toxic, contaminant or abrasive products (ammonia, urea, etc.), the use of activated zeolites in any form, the need to have some machinery or process specific for its application, the use of silicon-aluminium sorbents, the implementation of specific scrubbing systems, all of which increase the cost of or complicate the effective decontamination of industrial flue gases.

### DESCRIPTION OF THE INVENTION

The present invention has the aim of overcoming the drawbacks of conventional systems for reducing the proportion of NOx, SOx, dioxins and/or total reduced sulphur present in flue gases, by means of a method comprising of spraying a decontaminant composition with the flue gases, in which method the liquid composition is a liquid composition containing an aqueous extract of plant cell wall polysaccharides.

The aqueous extract can be selected from among extracts of phanerogamous plants that contain at least 4 % by weight referring to its dry weight of cell wall polysaccharides, algae that contain at least 9 % by weight referring to its dry weight of cell wall polysaccharides, and mixtures thereof. In particular, the polysaccharides are soluble, colloidal and particulate polysaccharides coming from the plant cell wall. These polysaccharides can be partially hydrolysed.

Suitable aqueous extracts of algae are, for example, extracts of green algae (*Chlorophyta*), such as for example extracts of green algae of the genera *Ulva, Enteromorpha* and mixtures thereof, extracts of red algae *(Rhodophyta),* such as for example extracts of red algae of the genera *Hypnea, Eucheuma, Kappaphycus, Gracilaria Ulva, Enteromorpha* and mixtures thereof, and extracts of brown algae *(Phaeophyta),* such as for example extracts of brown algae of the genera *Macrocystis, Laminaria, Ascophyllum, Ecklonia, Fucus* and mixtures thereof. The extracts can be mixed together.

According to the invention, the extract preferably comprises 0.5 - 7 % by weight and more preferably 1.6 - 4 % by weight of cell wall polysaccharides. The extract likewise preferably comprises 2 - 15 % by weight and more preferably 3 - 7 % by weight of dry matter.

The composition that can be used in the present invention can contain from 1 to 100 % by weight of aqueous extract and between 99 and 0 % of water. Said composition preferably comprises from 5 to 50 % by volume of aqueous extract and between 95 and 50 % by volume of water, and more preferably from 10 to 40 % by volume of aqueous extract and between 90 and 60 % by volume of water. Compositions of this type are especially suitable as sprayable liquid compositions that can be brought into contact by spraying them in a manner that is itself conventional on the flue gases discharged by a post-combustion duct, such as for example a flue.

So, the compositions of the present invention can be applied by means of conventional injectors, sprayers or nebulisers into the post-combustion ducts for gases, in such a way that they are distributed as uniformly as possible throughout the entire internal perimeter of the gas duct. A pressure of 2-5 bars is usually sufficient.

The composition in terms of cell wall polysaccharides of the compositions used in the present inventive method (with a high content in polygalacturonic, polymanuronic and polyguluronic compounds, mucopolysaccharides, proteoglycanes and polysaccharides of pectin) confer on it both the capacity to self-construct a hydrated cross-linked supramolecular mesh in the injection zone and also a high reactivity and catalytic activity with regard to NOx.

The supramolecular mesh formed by the aqueous plant extracts used in the present inventive method is arranged as a "catalytic cloud" on account of the intrinsic colloidal properties of the plant polysaccharides that it comprises, at the same time permitting unimpeded transit for the gases and an enormous surface for catalytic reaction to NOx, which is orders of magnitude larger than that of zeolites with the highest S//V ratio. The catalytic properties of the cloud formed by the composition are conferred on it both by the cell wall polysaccharides and by the minerals which, in a natural way, are adsorbed in them (especially in plants of marine origin), and also by the solutes in the hydrolysis process of the plant, which remain dissolved in the hydration layer of the polysaccharides in the nebulisation-spraying process.

So, the reactive specificity of the polysaccharides described (like the enormous surface/volume ratio of the mesh which are formed embedded in their corresponding hydration layer) which make up the catalytic cloud and their constant regeneration (since they are constantly injected by an array of injectors in the gas discharge ducts) confer on it an enormous reactivity, an enormous reactive surface and constant efficiencies, very much higher than any other product or method previously applied.

The duration (persistence) of the catalytic cloud formed by the compositions used according to the present invention is a function of the following variables: temperature of the gases, flow of the gases, dilution of the aqueous plant extracts, flow and number of sprayers/nebulisers installed in the duct. Depending on those variables, each industrial plant can adapt the application of the compositions to the characteristics of the gases emitted by it, preferably in a temperature range varying between 30 and 350 °C, and more preferably between 50 and 90 °C.

The application of the aqueous plant extracts for reduction of NOx in flue gases at the same time generates a reduction in the emissions of SOx (sulphur oxides), total reduced sulphur and dioxins. This effect is possibly due to the same properties, justification and hypothesis of the composition and effect of the catalytic cloud described in the previous section referring to the elimination of NOx.

In order to prepare a useful composition for the method described above, this can be done by submitting fragments of plants containing cell wall polysaccharides to a process of extraction, solubilisation and hydrolysis in an aqueous reaction medium at a pH between 2 and 11, and preferably at a pH between 3 and 8. The fragments of plants are preferably dehydrated and crushed and/or ground until achieving a granulometry that can vary between 10 and 10,000 microns and which is preferably between 30 and 300 microns.

The extraction, solubilisation and partial hydrolysis can be carried out at a temperature between 20 and 90 °C, and particularly at a temperature between 50 and 70 °C, with the hydrolysis being carried out from between 1 to 24 hours, for example, and preferably from 3 to 8 hours. It is especially suitable to carry out the hydrolysis with stirring with rotors which turn with a rotation speed of between 30 and 400 rpm.

### MODES OF EMBODIMENT OF THE INVENTION

The present invention is furthermore illustrated by means of the following examples of application.

### EXAMPLE 1

10 kg of previously dehydrated green algae of the genus *Ulva,* 10 kg of previously dehydrated red algae of the genus *Gracilaria* and 10 kg of previously dehydrated brown algae of the genus *Fucus* were mixed, crushed and ground until a mixture of algae fragments was obtained with particle sizes between 100 and 200 microns. The mixture of fragments was introduced into a tank provided with a cross-shaped rotor rotating at a speed of 20 rpm with 500 litres of water at a temperature of 60°C. The pH of the mixture of fragments/water was 6.7 and the mixture was kept stirring for 6 hours with a raw aqueous plant extract being obtained

The raw extract was withdrawn from the tank and filtered through a filter with a mesh size of 100 microns in order to obtain a filtered aqueous plant extract.

10 kg of filtered aqueous plant extract were diluted with 10 kg of water and the composition thus obtained was applied by means of sprayers at 4 bars to four levels in a flue that emitted gases at a temperature of 50°C, with a concentration of 250 ppm of NOx.

Reduction efficiencies in the NOx content of the gases were sequentially obtained of: 65 %, 80 %, 90 % and 97 %, respectively. Moreover, the SOx emissions were reduced by a percentage of between 50 % and 65 %, and emissions of dioxins were reduced by at least 25 %.

## Claims

1. A method of reducing the proportion of NOx, SOx, dioxins, total reduced sulphur and mixtures thereof, in flue gases, comprising of spraying a decontaminating composition over the flue gases, in which method the composition comprises a liquid composition containing an aqueous extract of plant cell wall polysaccharides.

2. A method according to claim 1, **characterised in that** the aqueous extract is selected from extracts of phanerogamous plants that contain at least 4 % referring to its dry weight of cell wall polysaccharides, algae that contain at least 9 % by weight referring to its dry weight of cell wall polysaccharides, and mixtures thereof.

3. A method according to claim 1 or 2, **characterised in that** the aqueous extract of algae is selected from among extracts of green algae *(Chlorophyta),* extracts of red algae *(Rhodophyta)* and extracts of brown algae *(Phaeophyta),* and mixtures thereof.

4. A method according to claim 3, **characterised in that** the aqueous extract of green algae (Chlorophyta) is selected from among algae of the genus *Ulva,* extracts of the genus *Enteromorpha* and mixtures thereof.

5. A method according to claim 3, **characterised in that** the aqueous extract of red algae *(Rhodophyta)* is selected from among algae of the genus *Gracilaria,* extracts of the genus *Eucheuma,* extracts of the genus *Kappaphycus*, extracts of the genus *Hypnea* and mixtures thereof.

6. A method according to claim 3, **characterised in that** the aqueous extract of brown algae *(Phaeophyta),* is selected from among algae of the genus *Macrocystis,* extracts of the genus *Laminaria,* extracts of the genus *Ascophyllum,* extracts of the genus *Ecklonia,* extracts of the genus *Fucus* and mixtures thereof.

7. A method according to any of claims 1 to 6, **characterised in that** the extract comprises 2 - 15 % by weight of dry matter.

8. A method according to claim 7, **characterised in that** the extract comprises 3 - 7 % by weight of dry matter.

9. A method according to any of the above claims, **characterised in that** the extract comprises 0.5 - 7 % by weight of cell wall polysaccharides.

10. A method according to claim 9, **characterised in that** the extract comprises 1.5 - 4 % by weight of cell wall polysaccharides.

11. A method according to any of the above claims, **characterised in that** the cell wall polysaccharides are soluble, colloidal and particulate polysaccharides coming from the plant cell wall.

12. A method according to claim 11, **characterised in that** the cell wall polysaccharides are partially hydrolysed.

13. A method according to any of the above claims, **characterised in that** the composition comprises from 1 to 100 % by weight of the aqueous extract and from 99 to 0 % of water.

14. A method according to any of the above claims, **characterised in that** the composition comprises from 5 to 50 % by volume of the aqueous extract and from 95 to 50 % by volume of water.

15. A method according to any of the above claims, **characterised in that** the composition comprises from 10 to 30 % by volume of the aqueous extract and from 90 to 70 % by volume of water.

16. A method according to claim 12, **characterised in that** the liquid composition is sprayed on flue gases discharged via a post-combustion duct.

17. A method according to any of claims 1 to 16, **characterised in that** the composition is sprayed on flue gases at a temperature of between 30 and 350 ^{a}C.

18. A method according to any of claims 1 to 17, **characterised in that** the composition is sprayed on flue gases at a temperature of between 50 and 90 °C.

## Patentansprüche

1. Verfahren zum Verringern des Anteils an NOx, SOx, Dioxinen, gesamtem reduziertem Schwefel und Mischungen davon in Abgasen, umfassend Sprühen einer Dekontaminierungszusammensetzung über die Abgase, wobei in dem Verfahren die Zusammensetzung eine flüssige Zusammensetzung umfasst, die einen wässrigen Extrakt von Pflanzenzellwandpolysacchariden enthält.

2. Verfahren nach Anspruch 1, **dadurch gekennzeichnet, dass** der wässrige Extrakt ausgewählt ist aus Extrakten von Blütenpflanzen (Phanerogamen), die mindestens 4 % Zellwandpolysaccharide, bezogen auf ihr Trockengewicht, enthalten, Algen, die mindestens 9 Gewichts-% Zellwandpolysaccharide, bezogen auf ihr Trockengewicht, enthalten, und Mischungen davon.

3. Verfahren nach Anspruch 1 oder 2, **dadurch gekennzeichnet, dass** der wässrige Extrakt von Algen ausgewählt ist aus Extrakten von Grünalgen *(Chlorophyta),* Extrakten von Rotalgen *(Rhodophyta)* und Extrakten von Braunalgen *(Phaeophyta)* und Mischungen davon.

4. Verfahren nach Anspruch 3, **dadurch gekennzeichnet, dass** der wässrige Extrakt von Grünalgen *(Chlorophyta)* ausgewählt ist aus Algen der Gattung *Ulva*, Extrakten der Gattung *Enteromorpha* und Mischungen davon.

5. Verfahren nach Anspruch 3, **dadurch gekennzeichnet, dass** der wässrige Extrakt von Rotalgen *(Rhodophyta)* ausgewählt ist aus Algen der Gattung *Gracilaria,* Extrakten der Gattung *Eucheuma,* Extrakten der Gattung *Kappaphycus*, Extrakten der Gattung *Hypnea* und Mischungen davon.

6. Verfahren nach Anspruch 3, **dadurch gekennzeichnet, dass** der wässrige Extrakt von Braunalgen *(Phaeophyta)* ausgewählt ist aus Algen der Gattung *Macrocystis*, Extrakten der Gattung *Laminaria*, Extrakten der Gattung *Ascophyllum*, Extrakten der Gattung *Ecklonia*, Extrakten der Gattung *Fucus* und Mischungen davon.

7. Verfahren nach einem der Ansprüche 1 bis 6, **dadurch gekennzeichnet, dass** der Extrakt 2 bis 15 Gewichts-% Trockenmasse umfasst.

8. Verfahren nach Anspruch 7, **dadurch gekennzeichnet, dass** der Extrakt 3 bis 7 Gewichts-% Trockenmasse umfasst.

9. Verfahren nach einem der obigen Ansprüche, **dadurch gekennzeichnet, dass** der Extrakt 0,5 bis 7 Gewichts-% Zellwandpolysaccharide umfasst.

10. Verfahren nach Anspruch 9, **dadurch gekennzeichnet, dass** der Extrakt 1,5 bis 4 Gewichts-% Zellwandpolysaccharide umfasst.

11. Verfahren nach einem der obigen Ansprüche, **dadurch gekennzeichnet, dass** die Zellwandpolysaccharide lösliche, kolloidale und partikelförmige Polysaccharide sind, die von der Pflanzenzellwand stammen.

12. Verfahren nach Anspruch 11, **dadurch gekennzeichnet, dass** die Zellwandpolysaccharide partiell hydrolysiert sind.

13. Verfahren nach einem der obigen Ansprüche, **dadurch gekennzeichnet, dass** die Zusammensetzung von 1 bis 100 Gewichts-% des wässrigen Extrakts und von 99 bis 0 % Wasser enthält.

14. Verfahren nach einem der obigen Ansprüche, **dadurch gekennzeichnet, dass** die Zusammensetzung von 5 bis 50 Volumen-% des wässrigen Extrakts und von 95 bis 50 Volumen-% Wasser enthält.

15. Verfahren nach einem der obigen Ansprüche, **dadurch gekennzeichnet, dass** die Zusammensetzung von 10 bis 30 Volumen-% des wässrigen Extrakts und von 90 bis 70 Volumen-% Wasser enthält.

16. Verfahren nach Anspruch 12, **dadurch gekennzeichnet, dass** die flüssige Zusammensetzung auf Abgase gesprüht wird, die über einen Nachverbrennungskanal austreten.

17. Verfahren nach einem der Ansprüche 1 bis 16, **dadurch gekennzeichnet, dass** die Zusammensetzung bei einer Temperatur zwischen 30 und 350 °C auf Abgase gesprüht wird.

18. Verfahren nach einem der Ansprüche 1 bis 17, **dadurch gekennzeichnet, dass** die Zusammensetzung bei einer Temperatur zwischen 50 und 90 °C auf Abgase gesprüht wird.

## Revendications

1. Procédé pour réduire la proportion de NOx, SOx, dioxines, soufre réduit total et leurs mélanges, dans les gaz de combustion, comprenant la pulvérisation d'une composition de décontamination sur les gaz de combustion, procédé dans lequel la composition comprend une composition liquide contenant un extrait aqueux de polysaccharides de paroi cellulaire de plante.

2. Procédé selon la revendication 1, **caractérisé en ce que** l'extrait aqueux est choisi parmi les extraits de plantes phanérogames qui contiennent au moins 4 %, par rapport à leur poids sec, de polysaccharides de paroi cellulaire, d'algues qui contiennent au moins 9 % en poids, par rapport à leur poids sec, de polysaccharides de paroi cellulaire, et leurs mélanges.

3. Procédé selon la revendication 1 ou 2, **caractérisé en ce que** l'extrait aqueux d'algues est choisi parmi les extraits d'algues vertes *(Chlorophyta),* les extraits d'algues rouges *(Rhodophyta)* et les extraits d'algues brunes *(Phaeophyta),* et leurs mélanges.

4. Procédé selon la revendication 3, **caractérisé en ce que** l'extrait aqueux d'algues vertes *(Chlorophyta)* est choisi parmi les algues du genre *Ulva,* les extraits du genre *Enteromorpha* et leurs mélanges.

5. Procédé selon la revendication 3, **caractérisé en ce que** l'extrait aqueux d'algues rouges *(Rhodophyta)* est choisi parmi les algues du genre *Gracilaria,* les extraits du genre *Eucheuma,* les extraits du genre *Kappaphycus*, les extraits du genre *Hypnea* et leurs mélanges.

6. Procédé selon la revendication 3, **caractérisé en ce que** l'extrait aqueux d'algues brunes *(Phaeophyta)* est choisi parmi les algues du genre *Macrocystis,* les extraits du genre *Laminaria,* les extraits du genre *Ascophyllum,* les extraits du genre *Ecklonia,* les extraits du genre *Fucus* et leurs mélanges.

7. Procédé selon l'une quelconque des revendications 1 à 6, **caractérisé en ce que** l'extrait comprend 2 à 15 % en poids de matière sèche.

8. Procédé selon la revendication 7, **caractérisé en ce que** l'extrait comprend 3 à 7 % en poids de matière sèche.

9. Procédé selon l'une quelconque des revendications ci-dessus, **caractérisé en ce que** l'extrait comprend 0,5 à 7 % en poids de polysaccharides de paroi cellulaire.

10. Procédé selon la revendication 9, **caractérisé en ce que** l'extrait comprend 1,5 à 4 % en poids de polysaccharides de paroi cellulaire.

11. Procédé selon l'une quelconque des revendications ci-dessus, **caractérisé en ce que** les polysaccharides de paroi cellulaire sont des polysaccharides solubles, colloïdaux et particulaires provenant de la paroi cellulaire de plantes.

12. Procédé selon la revendication 11, **caractérisé en ce que** les polysaccharides de paroi cellulaire sont partiellement hydrolysés.

13. Procédé selon l'une quelconque des revendications ci-dessus, **caractérisé en ce que** la composition comprend de 1 à 100 % en poids de l'extrait aqueux et de 99 à 0 % d'eau.

14. Procédé selon l'une quelconque des revendications ci-dessus, **caractérisé en ce que** la composition comprend de 5 à 50 % en volume de l'extrait aqueux et de 95 à 50 % en volume d'eau.

15. Procédé selon l'une quelconque des revendications ci-dessus, **caractérisé en ce que** la composition comprend de 10 à 30 % en volume de l'extrait aqueux et de 90 à 70 % en volume d'eau.

16. Procédé selon la revendication 12, **caractérisé en ce que** la composition liquide est pulvérisée sur les gaz de combustion déchargés via une conduite de postcombustion.

17. Procédé selon l'une quelconque des revendications 1 à 16, **caractérisé en ce que** la composition est pulvérisée sur les gaz de combustion à une température comprise entre 30 et 350°C.

18. Procédé selon l'une quelconque des revendications 1 à 17, **caractérisé en ce que** la composition est pulvérisée sur les gaz de combustion à une température comprise entre 50 et 90°C.
